# EUROPEAN PATENT APPLICATION

(11) **EP 1 717 921 A1**
(43) Date of publication of application: **02.11.2006**
(21) Application number: 06006706.3
(22) Date of filing: 30.03.2006
(51) Int. Cl.: H02B 1/052

(54) **Highly versatile mounting rail for electrical components**

(30) Priority: 20.04.2005 IT MI20050708
(71) Applicant: COEPTE RAIL S.R.L., 20090 Buccinasco MI (IT)
(72) Inventor: Bré, Romano, 27010 Siziano (Prov. of Pavia) (IT); Bossi, Daniele, 20090 Buccinasco (Prov. of Milano) (IT)
(74) Representative: Alagem Modiano, Lara S.

(57) **Abstract**

A highly versatile mounting rail for supporting electrical components, comprising at least one longitudinally elongated body with a back wall (2a ÷ 2d) and with two side walls (3a ÷ 3d,4a ÷ 4d) which protrude from one face of the back wall and face each other. The side walls (3a ÷ 3d,4a ÷ 4d) are provided with wings (7a ÷ 7d,8a ÷ 8d) which can be engaged by the electrical components (6) to be supported. The wings comprise two mutually opposite internal wings (7a ÷ 7d,8a ÷ 8d) which protrude from the mutually facing faces of the side walls of the body of the section and is engageable by a portion (5a) of the electrical components (5) to be supported insertable between the side walls and two external wings (9a ÷ 9d,10a ÷ 10d) which protrude from the outer faces of the side walls and is engageable by a portion (5a) of the electrical components (5) to be supported arrangeable so as to straddle the body of the section.

## Description

The present invention relates to a highly versatile section for supporting electrical components.

As is known, in the production of electrical systems, many components, such as terminal strips, switches, residual-current devices or other devices, are grouped within appropriately provided cabinets or boxes to be fixed to walls or to be built into such walls. These components are usually supported by using generally metallic sections, which are fixed to a wall of the box or cabinet, or more generally to a wall, and to which the different electrical components are fastened adjacent to each other; such components being provided with a portion which is shaped appropriately in order to be coupled rapidly to the section.

Two types of sections are currently used to support electrical components: a first type of section which has a substantially C-shaped transverse cross-section and a second type of section which has a substantially Ω-shaped transverse cross-section.

The first type of section has a longitudinally elongated body composed substantially of a back wall, from one face of which two mutually parallel side walls protrude at right angles; said side walls have, at their opposite end with respect to the back wall, two mutually opposite internal wings, which protrude toward each other so as to form shoulders for retaining the electrical components to be supported, which are provided with a portion which can be inserted between the two side walls of the section. In some types of sections having a C-shaped transverse cross-section, the wings of the pair of internal wings are arranged symmetrically with respect to a central plane which is perpendicular to the back wall and is parallel to the side walls; in other types of sections having a C-shaped transverse cross-section, the wings of the pair of internal wings are spaced in mutually different ways with respect to the back wall.

The second type of section has a longitudinally elongated body, which is also substantially composed of a back wall, from one face of which two mutually parallel side walls protrude at right angles; said side walls have, at their opposite end with respect to the back wall, two external wings, which protrude away from each other toward the outside of the section so as to form, in this case also, retention shoulders for the electrical components to be supported, which are provided with a portion which can be fitted so as to straddle the side walls of the section.

The differentiation of the sections for supporting electrical components corresponds to a differentiation of the electrical components that are currently commercially available, which are divided into two types of electrical components: one type of component which can be coupled to supporting sections having a C-shaped cross-section, and another type which can be coupled to supporting sections having an Ω-shaped cross-section.

In the installation of electrical systems, because many specific electrical components are provided in a single type, there is rather often the need to be able to arrange side by side, or in any case on a same supporting section, electrical components which belong to mutually different types. In such cases it is necessary to cut one section of the first type in order to arrange next to it a section of the second type, or vice versa.

This operation requires time, which can affect even significantly the overall production times of the electrical system, correspondingly increasing the associated costs.

In order to solve this problem, electrical components have been provided which are structured so that they can mate both with supporting sections having a C-shaped cross-section and with supporting sections having an Ω-shaped cross-section; however, this solution has been adopted only in the manufacture of some electrical components.

The aim of the present invention is to solve the problem described above by providing a section for supporting electrical components which can support both electrical components which can be mated to a section of the type having a C-shaped cross-section and electrical components which can be mated to a section of the type with an Ω-shaped cross-section.

Within this aim, an object of the invention is to provide a section for supporting electrical components which can be manufactured at costs which are comparable to those of currently commercially available sections for supporting electrical components.

Another object of the invention is to provide a section for supporting electrical components which, thanks to the possibility to support equally two different types of electrical components, simplifies and speeds up the operations for installing the electrical components.

Another object of the invention is to provide a section for supporting electrical components which can perform additional functions with respect to the functions of sections for supporting electrical components of the known type.

Another object of the invention is to provide a section for supporting electrical components which is simple to manufacture.

This aim and these and other objects, which will become better apparent hereinafter, are achieved by a section for supporting electrical components, comprising at least one longitudinally elongated body with a back wall and with two side walls which protrude from one face of said back wall and face each other, said side walls being provided with wings which can be engaged by the electrical components to be supported, characterized in that said wings comprise two mutually opposite internal wings which protrude from the mutually facing faces, or internal faces, of said side walls and can be engaged by a portion of the electrical components to be supported which can be inserted between said side walls and two external wings which protrude from the opposite faces, or external faces, of said side walls and can be engaged by a portion of the electrical components to be supported which can be arranged so as to straddle said body of the section.

Further characteristics and advantages of the invention will become better apparent from the description of some embodiments of the section according to the invention, illustrated by way of non-limiting example in the accompanying drawings, wherein:

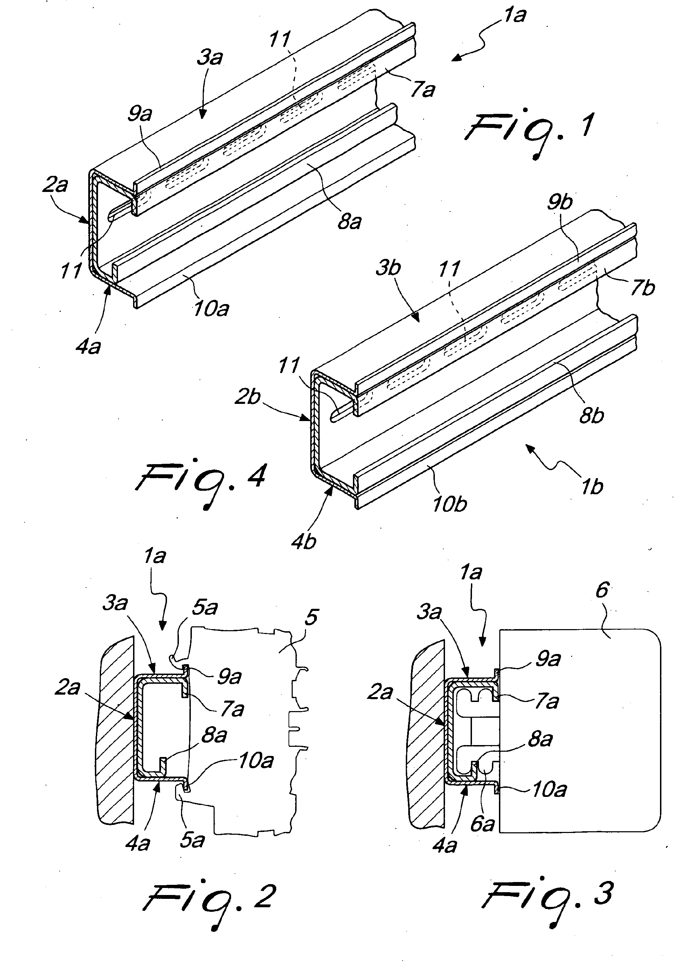

Figure 1 is a perspective view of a portion of a section according to the invention in a first embodiment:
Figure 2 is a transverse sectional view of the section of Figure 1, with one type of electrical component coupled thereto;
Figure 3 is a transverse sectional view of the section of Figure 1, with another type of electrical component coupled thereto;
Figure 4 is a perspective view of a portion of a section according to the invention in a second embodiment;

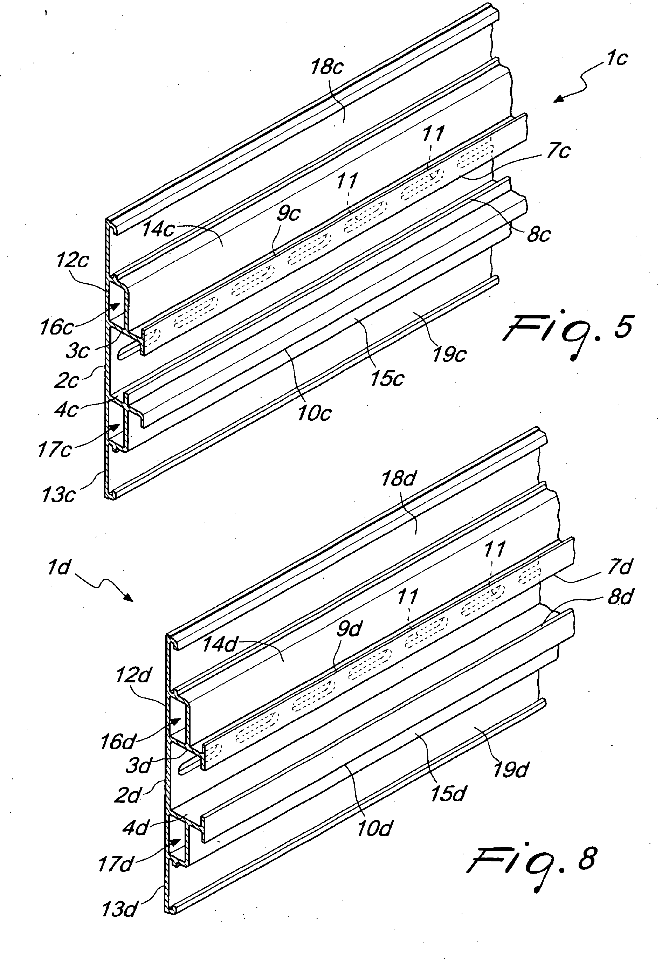

Figure 5 is a perspective view of a portion of a section according to the invention in a third embodiment;

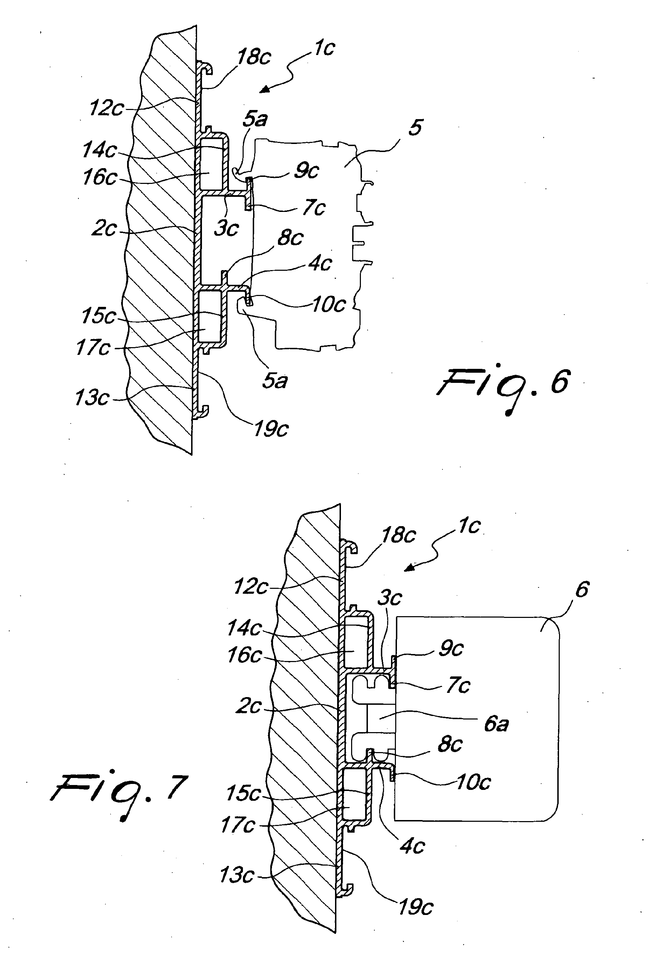

Figure 6 is a transverse sectional view of the section of Figure 5, with one type of electrical component coupled thereto;
Figure 7 is a transverse sectional view of the section of Figure 5, with another type of electrical component coupled thereto;
Figure 8 is a perspective view of a portion of a section according to the invention in a fourth embodiment.

With reference to the figures, the section for supporting electrical components according to the invention, generally designated by the reference numerals 1a, 1b, 1c, 1d in the various embodiments, comprises at least one longitudinally elongated body, whose length can be varied according to the requirements, with a back wall 2a, 2b, 2c, 2d and with two side walls 3a, 4a, 3b, 4b, 3c, 4c, 3d, 4d which protrude from a same face of the back wall 2a, 2b, 2c, 2d and face each other. The side walls 3a, 4a, 3b, 4b, 3c, 4c, 3d, 4d are provided with wings which can be engaged by the electrical components 5, 6 to be supported.

According to the invention, said wings comprise two mutually opposite internal wings 7a, 8a, 7b, 8b, 7c, 8c, 7d, 8d, which protrude from the mutually facing faces, or internal faces, of the side walls 3a, 4a, 3b, 4b, 3c, 4c, 3d, 4d and can be engaged by a portion 6a of the electrical components 6 to be supported, which can be inserted between the side walls 3a, 4a, 3b, 4b, 3c, 4c, 3d, 4d and two external wings 9a, 10a, 9b, 10b, 9c, 10c, 9d, 10d, which protrude from the opposite faces, or external faces, of the side walls 3a, 4a, 3b, 4b, 3c, 4c, 3d, 4d and can be engaged by a portion 5a of the electrical components 5 to be supported, which can be arranged so as to straddle the side walls 3a, 4a, 3b, 4b, 3c, 4c, 3d, 4d of the body of the section.

The internal profile of the portion of the body of the section composed of the internal wings 7a, 8a, 7b, 8b, 7c, 8c, 7d, 8d, by the side walls 3a, 4a, 3b, 4b, 3c, 4c, 3d, 4d, and by the back wall 2a, 2b, 2c, 2d has a substantially C-shaped transverse cross-section (i.e. is essentially shaped as a C), while the external profile of the portion of the body of the section composed of the external wings 9a, 10a, 9b, 10b, 9c, 10c, 9d, 10d, by the side walls 3a, 4a, 3b, 4b, 3c, 4c, 3d, 4d, and by the back wall 2a, 2b, 2c, 2d has a substantially Ω-shaped transverse cross-section.

In this manner, the section according to the invention can be mated both with electrical components which currently can be fastened to sections having a C-shaped transverse cross-section and with electrical components which can currently be fastened to sections having an Ω-shaped transverse cross-section.

Preferably, in the various illustrated embodiments, the side walls 3a, 4a, 3b, 4b, 3c, 4c, 3d, 4d lie substantially at right angles to the back wall 2a, 2b, 2c, 2d and are arranged on mutually parallel planes.

The internal wings 7a, 8a, 7b, 8b, 7c, 8c, 7d, 8d protrude preferably substantially at right angles (i.e. but for small deviations that are inherent and well known for the technical field) from the corresponding side wall 3a, 4a, 3b, 4b, 3c, 4c, 3d, 4d and are substantially parallel to the back wall 2a, 2b, 2c, 2d.

The external wings 9a, 10a, 9b, 10b, 9c, 10c, 9d, 10d protrude preferably substantially at right angles from the corresponding side wall 3a, 4a, 3b, 4b, 3c, 4c, 3d, 4d and are substantially parallel to the back wall 2a, 2b, 2c, 2d.

In the second embodiment and in the fourth embodiment, the internal wings 7a, 8a, 7b, 8b, 7c, 8c, 7d, 8d are arranged symmetrically with respect to a central plane which is perpendicular to the back wall 2a, 2b, 2c, 2d and is equidistant from the side walls 3a, 4a, 3b, 4b, 3c, 4c, 3d, 4d.

In the first and third embodiments, the internal wings 7a, 8a, 7b, 8b, 7c, 8c, 7d, 8d are arranged at mutually different distances with respect to the back wall 2a, 2b, 2c, 2d.

The external wings 9a, 10a, 9b, 10b, 9c, 10c, 9d, 10d, in the various illustrated embodiments, are arranged on a same plane which is parallel to the back wall 2a, 2b, 2c, 2d.

In the various embodiments, the back wall 2a, 2b, 2c, 2d can be crossed by holes or slots 11 for fixing the section to a supporting wall.

In the first and second embodiments, the section 1a, 1b according to the invention is composed of two separate body sections which are arranged one inside the other: an internal one, which has a C-shaped transverse cross-section, and an external one, which has an Ω-shaped transverse cross-section, but it can also be provided monolithically.

In the third and fourth embodiments, the section 1c, 1d according to the invention is provided monolithically and is preferably constituted by an extruded section, preferably made of aluminum.

Moreover, in the third and fourth embodiments of the section 1c, 1d according to the invention, the back wall 2c, 2d has, laterally with respect to the side walls 3c, 4c, 3d, 4d, lateral extensions 12c, 13c, 12d, 13d.

Moreover, the side walls 3c, 4c, 3d, 4d have, on their external faces, which support the external wings 9c, 10c, 9d, 10d, lateral extensions 14c, 15c, 14d, 15d, which connect to the lateral extensions 12c, 13c, 12d, 13d of the back wall 2c, 2d and which, together with them, form first seats 16c, 17c, 16d, 17d, which are open at the longitudinal ends of the body of the section.

Said first seats 16c, 17c, 16d, 17d can be used to fix wiring straps for the cables to be connected to the electrical components to be supported by means of the section according to the invention.

Second seats 18c, 19c, 18d, 19d are formed by appropriately provided contoured protrusions in the lateral extensions 12c, 13c, 12d, 13d of the back wall 2c, 2d and are open on the side of the back wall 2c, 2d that supports the side walls 3c, 4c, 3d, 4d.

Said second seats 18c, 19c, 18d, 19d can be used to insert therein marking tags or in order to fix the section to a supporting wall or structure.

It should be noted that the section according to the invention, if formed monolithically by using a material with high conductivity, such as for example aluminum, can be used as a conductor in the dissipation system of the electrical system.

In practice it has been found that the section for supporting electrical components according to the invention fully achieves the intended aim, since it can be engaged correctly both by electrical components of the type which can be coupled to a section having a C-shaped cross-section and by electrical components of the type which can be coupled to a section having an Ω-shaped cross-section, thus allowing to arrange side by side electrical components of different types without requiring operations for cutting and adapting the section.

The section thus conceived is susceptible of numerous modifications and variations, all of which are within the scope of the appended claims; all the details may further be replaced with other technically equivalent elements.

In practice, the materials used, so long as they are compatible with the specific use, as well as the dimensions, may be any according to requirements and to the state of the art.

The disclosures in Italian Patent Application No. MI2005A000708 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A section for supporting electrical components, comprising at least one longitudinally elongated body with a back wall (2a ÷ 2d) and with two side walls (3a ÷ 3d, 4a ÷ 4d) which protrude from one face of said back wall (2a ÷ 2d) and face each other, said side walls being provided with wings (7a ÷ 7d, 8a ÷ 8d) which can be engaged by the electrical components (6) to be supported, **characterized in that** said wings comprise two mutually opposite internal wings (7a ÷ 7d, 8a ÷ 8d) which protrude from the mutually facing faces, or internal faces, of said side walls (3a ÷ 3d, 4a ÷ 4d) and can be engaged by a portion (6a) of the electrical components (6) to be supported which can be inserted between said side walls and two external wings (9a ÷ 9d, 10a ÷ 10d) which protrude from the opposite faces, or external faces, of said side walls and can be engaged by a portion (5a) of the electrical components (5) to be supported which can be arranged so as to straddle said body of the section.

2. The section according to claim 1, **characterized in that** the internal profile of the portion of the body of the section that is composed of said internal wings (7a ÷ 7d, 8a ÷ 8d), said side walls (3a ÷ 3d, 4a ÷ 4d) and said back wall (2a ÷ 2d) substantially has a C-shaped transverse cross-section.

3. The section according to claim 1, **characterized in that** the external profile of the portion of the body of the section that is composed of said external wings (9a ÷ 9d, 10a ÷ 10d), said side walls and said back wall (2a ÷ 2d) has a substantially Ω-shaped transverse cross-section.

4. The section according to one or more of the preceding claims, **characterized in that** said side walls (3a ÷ 3d, 4a ÷ 4d) lie substantially at right angles to said back wall (2a ÷ 2d) and are arranged on mutually parallel planes.

5. The section according to one or more of the preceding claims, **characterized in that** said internal wings (7a ÷ 7d, 8a ÷ 8d) protrude substantially at right angles from the corresponding side wall and are substantially parallel to said back wall (2a = 2d).

6. The section according to one or more of the preceding claims, **characterized in that** said external wings (9a ÷ 9d, 10a ÷ 10d) protrude substantially at right angles from the corresponding side wall and are substantially parallel to said back wall (2a ÷ 2d).

7. The section according to one or more of the preceding claims, **characterized in that** said internal wings (7a ÷ 7d, 8a ÷ 8d) are arranged symmetrically with respect to a central plane which is perpendicular to said back wall (2a ÷ 2d) and is equidistant from said side walls (3a ÷ 3d, 4a÷ 4d).

8. The section according to one or more of the preceding claims, **characterized in that** said internal wings (7a ÷ 7d, 8a ÷ 8d) are arranged at mutually different distances with respect to said back wall (2a ÷ 2d).

9. The section according to one or more of the preceding claims, **characterized in that** holes (11) for fixing the body of the section are formed within said back wall (2a ÷ 2d).

10. The section according to one or more of the preceding claims, **characterized in that** it comprises two separate longitudinally elongated bodies which are arranged one inside the other: an internal one, having a C-shaped transverse cross-section, and an external one, having an Ω-shaped transverse cross-section.

11. The section according to one or more of the preceding claims, **characterized in that** it is provided monolithically.

12. The section according to one or more of the preceding claims, **characterized in that** said back wall (2c, 2d) is provided, laterally with respect to said side walls (3c, 3d, 4c, 4d), with lateral extensions (12c, 12d, 13c, 13d).

13. The section according to one or more of the preceding claims, **characterized in that** said side walls (3c, 3d, 4c, 4d) have, on their outer faces, which support said external wings (9c, 9d, 10c, 10d), lateral extensions (14c, 14d, 15c, 15d) which connect to the lateral extensions (12c, 12d, 13c, 13d) of said back wall and form with them first seats (16c, 16d, 17c, 17d) which are open at the longitudinal ends of the body of the section.

14. The section according to one or more of the preceding claims, **characterized in that** second seats (18c, 18d, 19c, 19d) are formed in said lateral extensions (12c, 12d, 13c, 13d) of the back wall (2c, 2d) and are open on the side of said back wall (2c, 2d) that supports said side walls (3c, 4c, 3d, 4d).

15. The section according to one or more of the preceding claims, **characterized in that** said first seats (16c, 17c, 16d, 17d) are adapted to receive wiring straps for the cables to be connected to the electrical components to be supported by means of the section.

16. The section according to one or more of the preceding claims, **characterized in that** said second seats (18c, 18d, 19c, 19d) are adapted to receive marking tags.

17. The section according to one or more of the preceding claims, **characterized in that** it is constituted by an extruded section.
